# EUROPEAN PATENT SPECIFICATION

(11) **EP 0 958 741 B1**
(45) Date of publication and mention of the grant of the patent: **20.03.2002**
(21) Application number: 98124795.0
(22) Date of filing: 29.12.1998
(51) Int. Cl.: A01K 23/00, A61F 13/15

(54) **An absorbent garment, particulary for domestic animals**
Absorbierendes Kleidungsstück, insbesondere für Haustiere
Vêtement absorbant, en particulier pour des animaux domestiques

(30) Priority: 15.05.1998 IT MI981064
(43) Date of publication of application: 24.11.1999
(73) Proprietor: CIDIEFFE S.r.l., 20155 Milano (IT)
(72) Inventor: Cerutti, Gianvito, IT-20149 Milano (IT)
(74) Representative: Robba, Pierpaolo

(56) References cited:
- FR-A- 2 539 984
- GB-A- 2 316 850
- US-A- 4 523 337
- US-A- 4 917 683
- US-A- 5 283 910
- US-A- 5 634 916
- US-A- 5 662 640

## Description

The present invention relates to absorbent garments, particularly although exclusively, to be used on domestic animals.

Absorbent garments for domestic animals are useful both for absorbing the menstrual flow of females and for incontinence of puppies as well as of old animals.

Garments for domestic animals are known comprising a suitably shaped fabric sheet or "open" panty provided with an absorbent pad, that can be wound round and fastened to the animal's body and comprises an absorbent portion adapted to absorb organic fluids. Such garments are provided with fastening means for "closing" the panty, i.e. joining together the sheet edges and fit the garment to the animal's body.

Some of these articles are designed and manufactured as a one-piece garment and in such garments the closing and fastening members are applied during the article manufacturing, Other known panties are formed by a plurality of sections and the closing and fastening members are assembled in advance to one another according to different combinations.

When manufacturing and marketing said articles, the closing and fastening function is accomplished by ribbons provided with male and female cooperating raised portions (hook and loop), such ribbons being of, an elasticized (stretch) fabric or of an inextensible fabric. As an alternative, such closing and fastening means comprises elastic members secured to the lower and/or upper sections of the articles. A further known alternative provides for elasticized or (inextensible) bands combined with snap fasteners, buckles or conventional buttons sewn to the sheet.

In the manufacturing of said articles, the panties are formed of either woven or unwoven materials through manufacturing processes such "as sewing, layering, ultrasonic welding, hot or cold bonding, thermoforming, bonding, and the like. At present, to accomplish the absorbing function the known articles provide for (cleaning) tissties, multi-layer sheets of cellulosic voile, cut portions of feminine absorbent sanitary towels and other cellulosic materials either adhesive or not.

The materials and the manufacturing processes of the prior art generally increase the articles costs and often brings about the additional disadvantage of using materials that are not degradable, thus creating environmental problems when they are to be disposed of.

Panties and associated closure and fastening systems have been disclosed in many patents. Examples of closing and fastening systems for absorbent articles are disclosed in US-A-5 624 427 to Bergman and US-A-5 634 916 to Lavon.

The preamble of claim 1 is known from FR 2 539 984.

It is an object of the present invention to provide an improved absorbent garment, particularly for domestic animals that can be applied to the user's body without requiring the use of mechanical closure members of the male and female type (hook and loop), snap fasteners, buckles or conventional buttons sewn, and that does not require complicated manufacturing steps besides the cutting and punching of a raw material.

It is another object of the invention to provide a kit comprising one or more of the following separate components: a panty, an absorbent pad to be applied to such panty, and fastening and adjusting means that are to be assembled by the user thus making for the maximum flexibility and therefore with an optimum adherence to the user's body of a disposable absorbent article inserted in the panty.

It is a further object of the invention to reduce the costs of a system formed by a panty and the associated closing and fastening means by using inexpensive components and minimizing the known manufacturing process that required the steps of applying an adhesive and/or carrying out sewing, and/or bonding, and/or ultrasonic bonding, and/or thermoforming operations.

It is another object of the invention to provide a (completely) disposable system that is more respectful of the environment when the article is to be disposed after the use.

The above objects are accomplished through the invention consisting in an absorbent garment as claimed in claim 1. Additional advantageous characteristics of the invention are recited in the dependent claims.

The absorbent garment according to the invention could also be advantageously used by persons, after proper size and configuration adjustments.

In view of the above discussed objects, as well as of other objects, further information and a better understanding of the present invention can be obtained with reference to the following detailed description of preferred embodiments that are not to be meant as limiting the scope of the present invention.

In order to illustrate the invention, the attached drawings show some embodiments thereof that are presently preferred although this is not to be understood as a limitation. More particularly the invention is not limited to the arrangements here shown and disclosed. In the drawings :
Figures 1A, 1B and 1C are plan views of embodiments of a garment according to the invention;
Figure 1D shows a connecting strap or band in accordance with the invention;
Figure 2 is a perspective view of the a preferred embodiment of an assembled system according to the invention;
Figure 3 is a view illustrating the embodiment of Figure 2 worn by a dog;
Figure 4 is a perspective view of a second embodiment of the invention;
Figure 5 is a view illustrating the embodiment of Figure 4 worn by a dog;
Figure 6 is a top view of a third embodiment of the system of the invention;
Figure 7 is a view illustrating the embodiment of Figure 6 worn by a dog;
Figures 8 to 13 illustrate some embodiments of the absorbent pad;
Figures 14 to 18 illustrate some embodiments of the absorbent means incorporated inside the panties.

Throughout all the Figures the same numeral references are used to indicate equal or substantially equivalent components.

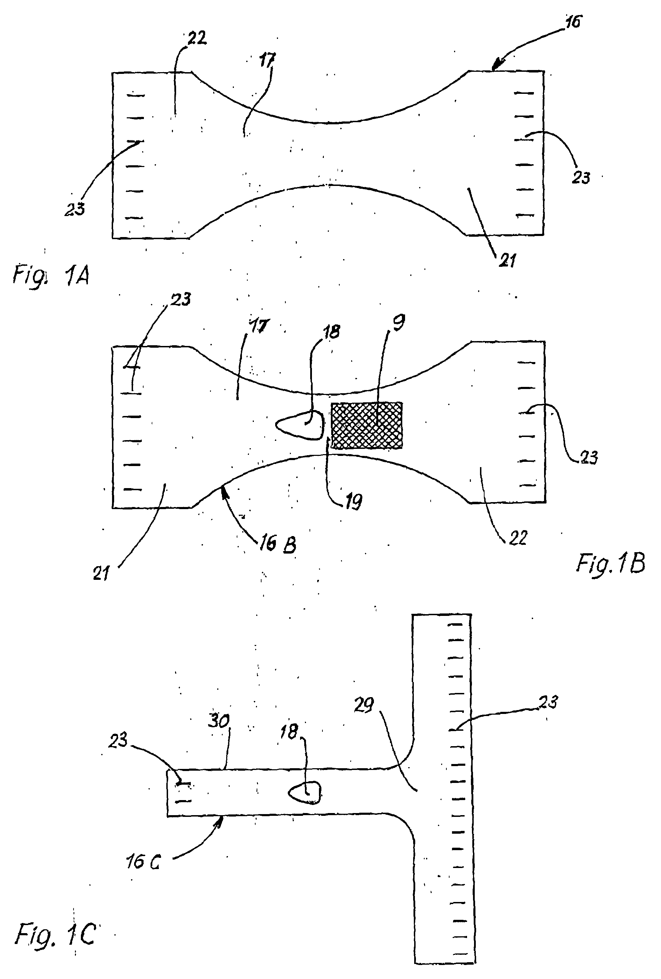

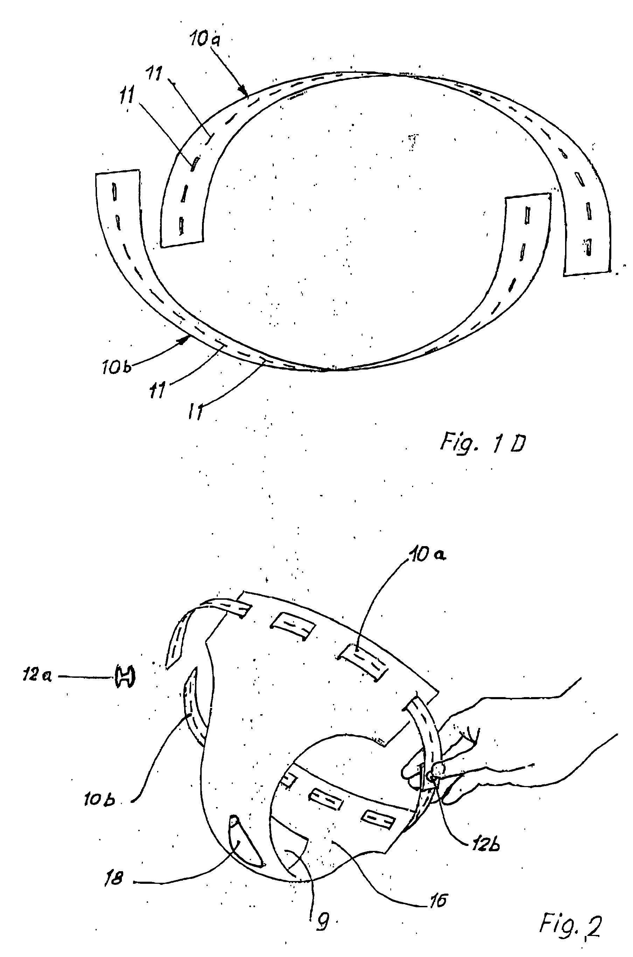

Figures 1A - 1D and 2 show the components of the system according to the invention, and more precisely a panty 16, an absorbent pad 9 to be affixed to the pant, and closing and fastening means 10, 12, adapted for closing and' fastening said panty around the animal body, adjusting it to the animal's size. As shown in Figures 1A and 1B, the panty 16 (16B) comprises a hour-glass shaped portion of sheet material 17, with two end sections 21 and 22, the width of which is substantially constant. In accordance with the embodiment illustrated in Fig. 1C, the panty 16C is substantially shaped like a T, with end portions 29 and 30 that are not symmetrical. Preferably the sheet material is of a nonwoven material, such as a spun-bonded, or dry-laid, or stitch-bonded material, of polypropylene, or polyester, or polyamide fibers, or a laminate sheet or a layer coupled to a plastic material extruded as a film.

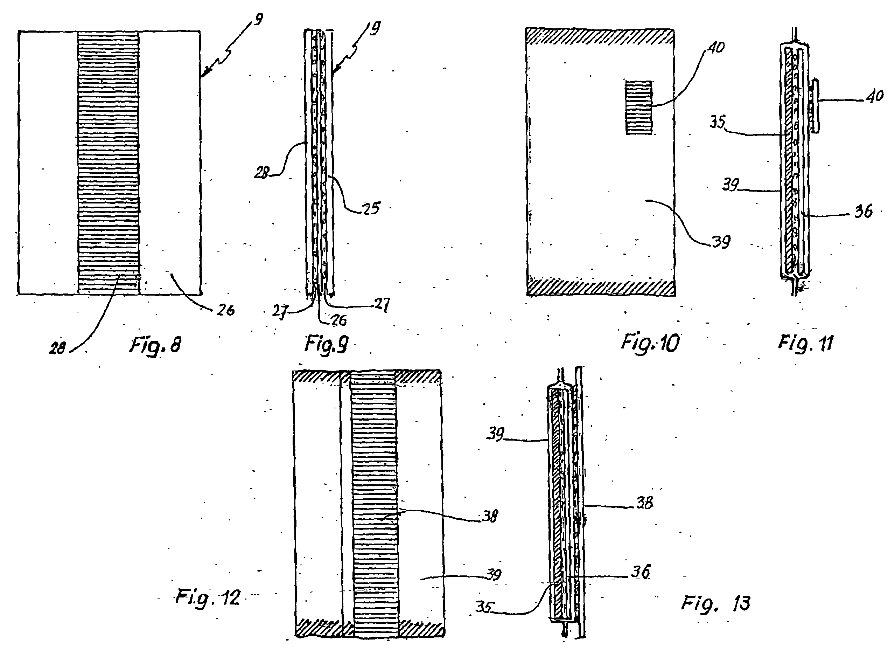

The pad 9 is fixed to the panty by means of an adhesive material that is applied to one face thereof and is covered by a protective sheet to be removed before applying the pad. Instead of being spread over the whole pad surface such adhesive material can be applied in form of strips. As shown in the embodiment of Figures 8 and 9, the pad 9 comprises an absorbent core 25, that in most cases is of an air laid nonwoven material, covered by a sheet of plastic material 26 forming the bottom layer on which one or more strips of an adhesive material 27, e.g. hot melt are applied. Over the adhesive layer 27 a protective sheet 28 is applied, for example of silicone paper, to be removed before the pad is applied to the panty. As shown in Fig. 9, a layer of adhesive is preferably used for joining together the absorbent core 25 and the bottom layer 26.

In accordance with the embodiments illustrated in Figures 10 to 13, the pad 9 comprises an absorbent core 35, preferably obtained from a multilayered structure of air laid nonwoven sheets and superabsorbent polymers, covered by a plastic sheet 36. The so formed layered structure is wound in a cover sheet 39 on the back of which there a means adapted to keep the absorbent pad over the panty is applied. Preferably such means comprises a transfer type label 40 (Figures 10 and 11), or one or more strips of adhesive 38 such as hot melt (Figures 12 and 13), on which a protective sheet, for example of silicone paper 39 is applied.

The size and the thickness of the pad 9 and/or the composition thereof (i.e. the parameters affecting the pad absorbency) are different in accordance with the user's characteristics that vary from the absorbency requested for a puppy or an old animal, to the (reduced) absorbent capability requested for a female.

Preferably, for use on domestic animals, typically dogs, the panty 16 provides for an opening 18 for the tail and the anus. As shown in the panty 16B of Fig. 1B, such opening may not be provided for. In the panty end sections 21 and 22 (or 29 and 30) there are formed two pluralities of slits 23, the height (length) of which is non lower than 15 mm. Preferably the number of slits is even, and in most cases such number is comprised between four and eight.

As shown in Fig. 1D, the fastening means 10 preferably comprises straps of a soft material, preferably an elastic cloth or a so called "elasticized" fabric, i.e. including elastic threads of natural or synthetic fibers.

Preferably the width of the straps 10 is not lower than 15 mm, and such straps are provided with openings or slots or loops 11, uniformly spaced along a longitudinal direction. Generally the two edges of each opening are relatively close to each other and preferably, when the material so allows, the openings are formed (punched) cuts in the elasticized fabric of the strap.

The system according to the invention further comprises engagement members 12 for joining together two strap portions (o two straps) in a desired position by means of the slots 11 and the engagement members 12. In the embodiment illustrated, the engagement means 12 comprises two-heads "buttons", having two enlarged "head" of substantially circular shape connected by a stem. More generally the engagement means 12 comprises members provided with two enlarged ends joined by a stem.

Such buttons are preferably realised of a plastic material and formed so that the diameter of each head can easily be inserted into one of the openings or slots 11 in the strap 10, when said strap is under tension, whereas it is rather difficult to be extracted when the strap is partially taut, typically when in use. The expression "difficult to be extracted" means that the accidental disengagement of a head from a slot 11 is practically impossible, while the intended extraction only requires a minimum of manual skill.

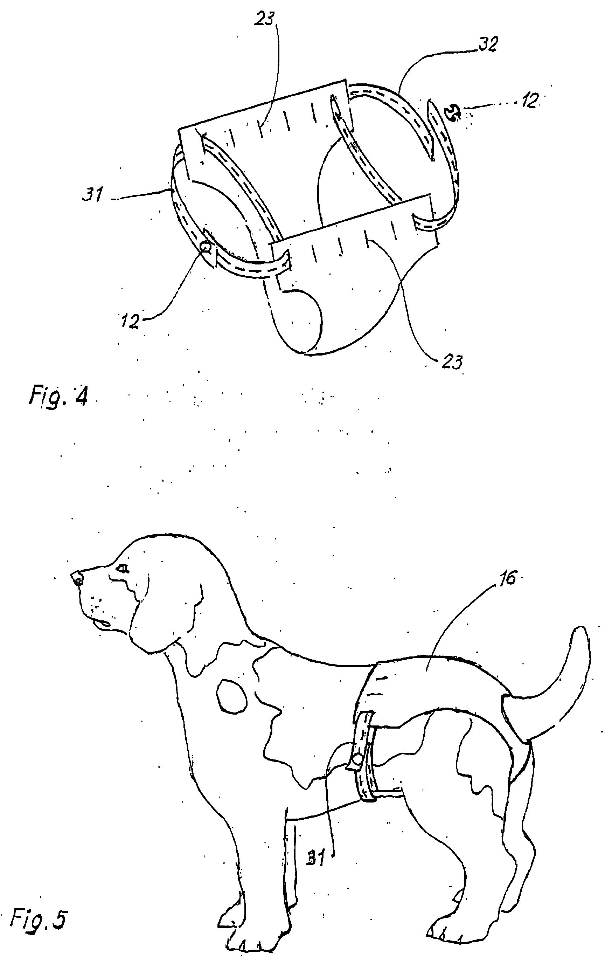

The height of the button stem is such as to retain (in use) two strap layers between the two inner faces of a button 12. As shown in Figures 2 and 4, the elasticised straps 10 are inserted into said slits 23 for making the panty adhering to the user's body.

More precisely, as shown in the perspective view of Figure 2, a first strap 10a is introduced through the slits of the upper section of the panty 16, and a second strap 10b is inserted through the slits of the panty lower section. Each strap passes through all the slits 23 of a plurality.

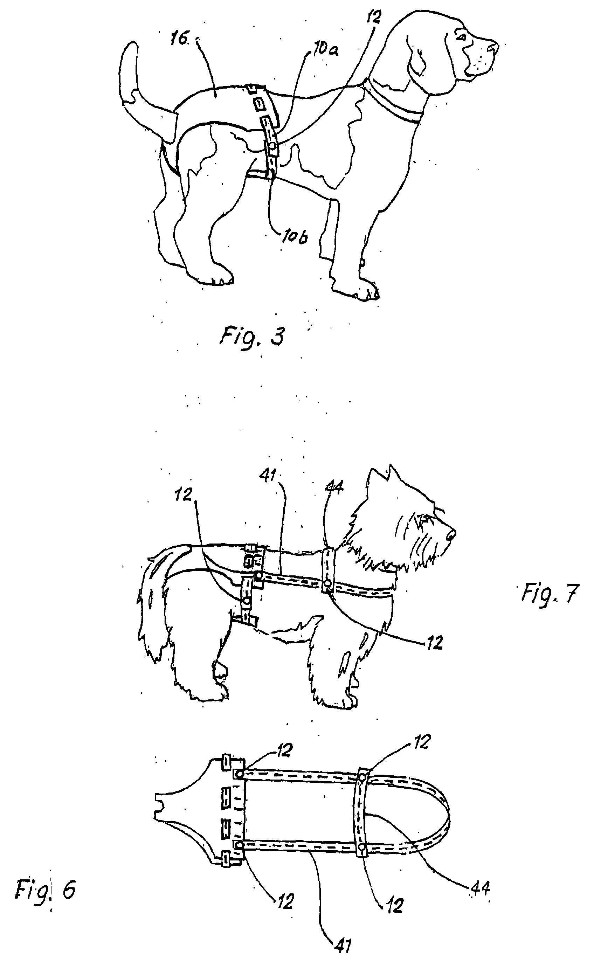

Still referring to Figure 2, in order to apply and adjust the panty to the wearer, a two-head button 12a is inserted into one selected slot in the strap 10a, and the other head of the same button is inserted into another selected slot in the second strap 10b, thus joining together the two straps. In a similar way a two-head button 12b is inserted into one selected slot in the strap 10a, and the other head of the same button is inserted into a selected slot in the second strap 10b. If the animal's size so allows, the slots are located nearby the strap ends. The elastic properties of the straps makes for a very good adherence around the user's body, an easy adjusting, and a complete adaptability to all the body dimensions. Figure 3 shows the panty of Figure 2 as applied to a dog's body.

According to an alternate embodiment (not illustrated in the drawings), a single strap passing through the slits of both sections and closed by a single member 12 can be used.

Figure 4 shows a second embodiment of the invention in which two elasticised straps 31, 32 are used, each strap being inserted in slits that are on the same side of the panty with a button 12 being used for joining together the two ends of a same strap.

Figure 5 clearly shows how the panty 16 of the above illustrated embodiment can be secured to the animal body. Preferably the strap passes through the two outmost slits on a given side of the panty 16, however other slits could be used. For example, the second or the third slits could be used for a better accommodation to the animal size.

Figures 6 and 7 illustrate a third embodiment of the invention provided for being worn by a dog, in which to the arrangement shown in Fig. 2 or in Fig. 4, at least an additional strap 41 has been added that engages two slits of the panty and passes around the animal chest, and can be connected to the dog collar.

Preferably a further supporting strap 44 can join the strap 41 passing over the animal back. The straps 41 and 44 have the same design as the strap 10, with slots 11 to be engaged with buttons 12. All such straps are provided with longitudinal slots and the connection and fastening of the above mentioned components are accomplished through two-headed buttons 12.

It is to be noted that the straps 41 and.44 can be easily obtained from strips 10, 10a or 10b (or portions thereof) of the formerly disclosed embodiments that have not been used, either by shortening or lengthening them, or possibly by using a suitable kit, to be sold together with a given number of panty packets.

According to the invention, such kit can comprise a roll of an elasticized material provided with regularly spaced slots, and a number of buttons. This way the waste of material is minimized and thus the unit cost of the article is reduced.

Thanks to the invention a system has been provided that is formed by a panty and associated closing and fastening means, that is simple to be manufactured, does not involve additional costs for the industrial assembly, can be reused without requiring a wash, and lessens the problems related to the waste disposal.

Moreover, by providing separable components, they can be individually collected for being disposed and/or recycled. More precisely, when the panty and the pad are of suitable non-reusable material, the garment becomes a disposable article, while the strips and the buttons - or more generally the means for fastening and adjusting the garment to the user's body - are reused.

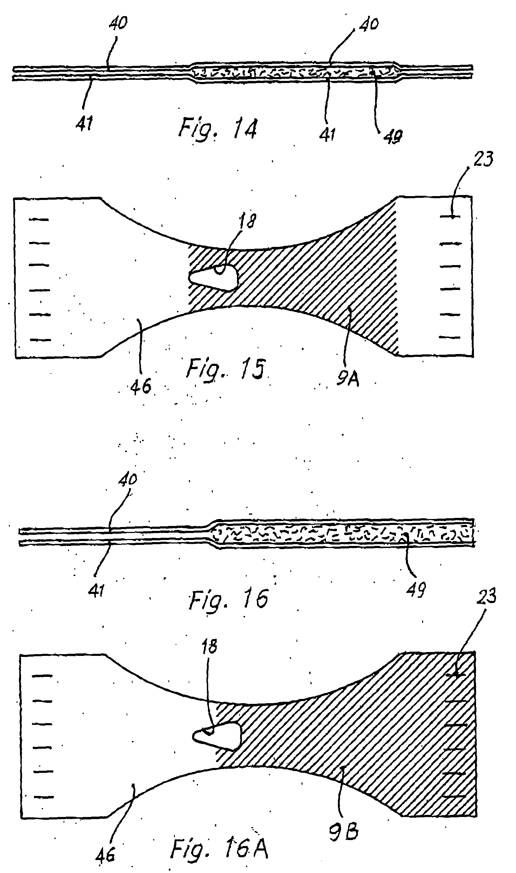

According to a further embodiment, shown in Figures 14 - 18, in lieu of an absorbent pad applied to the panty, absorbent means 49 sandwiched between the two layers 40 and 41 forming the panty 46 are used. The layer 40 is preferably a filtering nonwoven sheet while the layer 41 is of a waterproof material, such as a plastic film sheet.

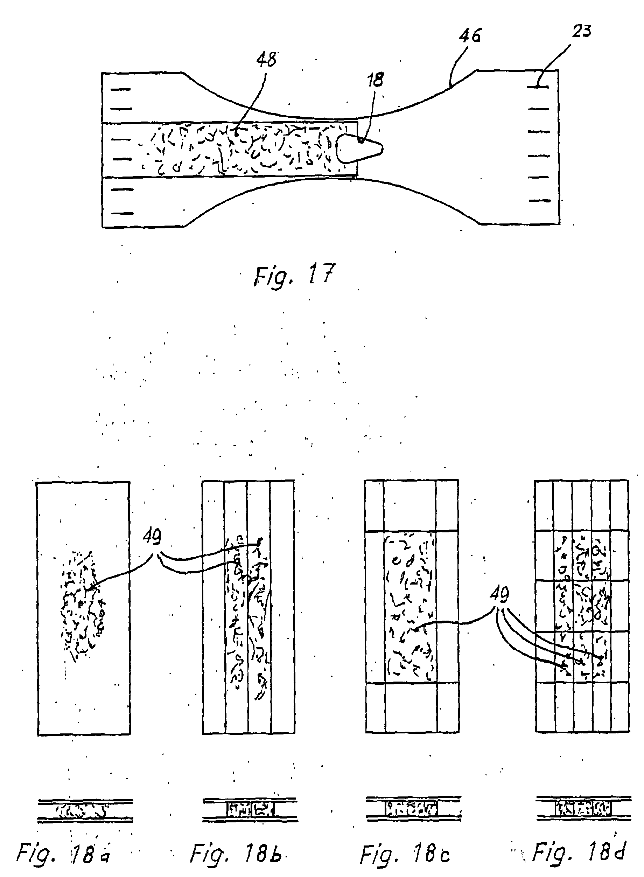

Layer 49 of an absorbent material of the "inner" pad is preferably formed by absorbent cotton or wadding, in case with the addition of superabsorbent powders known as SAP (Super Absorbent Polymers). Preferably, when powders of a superabsorbent material are incorporated, the granules arrangement is selected and controlled so as to prevent their leakage at the pad peripheral edges when this latter is wet, particularly at the area formed with the anus hole. Some possible structures for controlling the powders are shown in Figures 18a, 18b, 18c, 18d.

The surface size of the inner pad (that is the absorbent area of the panty) depends on several factors. In the embodiment of Fig. 16, the absorbent area is shown with a dashed line and extends over the whole panty width, from a point near the central hole to a point of the panty edge (in case with exclusion of the end section carrying the slits 23).

In an alternate embodiment shown in Fig. 17, for example adapted to large size animals, the absorbent surface can be limited to a central band 48.

Although the invention has been disclosed with reference to some preferred embodiments, the same is in general open to other applications and modifications that fall within the scope of the invention as will become evident to the skilled of the art.

## Claims

1. An absorbent garment, particularly for domestic animals such as dogs and the like, comprising a panty (16, 16B, 16C) formed of a sheet material (16), absorbent means (9), and means for fastening and adjusting said garment to the user's body, ***comprising at least one strap (10) and engagement means (12) adapted to releasably join said strap***
**characterized in that**
***said strap (10) is of a soft material and provided with openings or slots (11) uniformly distributed along a longitudinal direction, and said engagement means (12) are adapted to releasably join two parts of said strap in correspondence of said slots (11); and each of the end sections (21, 22; 29, 30) of the panty is provided with a plurality of slits (23) parallel to each other and to the panty longitudinal direction, allowing the introduction and the passage of said at least one strap (10) for fastening the panty around the animal body.***

2. A garment as claimed in claim 1, **characterized in that** said absorbent means (9) comprises an absorbent pad (9) applied to the outer surface of said panty (16), said pad (9) comprising an absorbent cope (25, 35) to which a sheet of plastic material (26, 36) provided with an adhesive (27), e.g. hot melt is secured.

3. A garment as claimed in claim 2, **characterized in that** said absorbent core (35) is a multilayered material of non-woven air laid fabric with or without superabsorbent polymers, covered by a plastic sheet (26) and enveloped in a cover (39) on the back of which an adhesive (40) is provided.

4. A garment as claimed in claims 1-3, **characterized in that** said at least one strap (10) is of an elastic fabric or of a fabric incorporating threads of natural or man-made fibers.

5. A garment as claimed in claims 1 to 4, **characterized in that** it provides at least one strap (10, 10a, 10b), said strap or each strap passing through the openings of a plurality of slits (23), the edges of said strap or the edges of two different straps being joined together by said engagement means (12).

6. A garment as claimed in claim 5, **characterized in that** each of said two straps (10a, 10b) passes through at least one opening of both the pluralities of slits (23), the two edges of a same strap being joined together by said engagement means (12).

7. A garment as claimed in the preceding claims, **characterized in that** said panty (16, 16C) provides for at least one opening (18) at a central position.

8. A garment as claimed in the preceding claims, **characterized in that** said engagement means (12) camprises two-head buttons of plastic material, the heads of said buttons being adapted to fit slots (11) in the strap(s).

9. A garment as claimed in the preceding claims, **characterized in that** the sheet material forming said panty (16) is chosen from the group formed by nonwoven materials, spun-bonded material, dry-laid, stitch-bonded material, polypropylene, polyester, polyamide fibers material, plastic film, layered material with extruded plastic material in form of a film.

10. A garment as claimed in the preceding claims, **characterized in that** it provides a further strap (41) engaging two slits of the panty (16) and passing around the animal chest, in case connected to the animal collar, and an additional supporting strap (44) engaging said further strap (41) and passing over the animal back.

11. A garment as claimed in claims 1 to 9, **characterized in that** said panty has a hour-glass shape.

12. A garment as claimed in claims 1 to 9, **characterized in that** said panty (16C) has a T shape.

13. A garment as claimed in claim 1, **characterized in that** said absorbent means (9A, 9B) comprises an absorbent layer (49) sandwiched between said two layers (40) and (41) of sheet material forming said panty (46).

14. A garment as claimed in claim 10, **characterized in that** said two layers (40) and (41) of sheet material are respectively of a filtering nonwoven material and of a waterproof material, such as a plastic film.

## Patentansprüche

1. Aufsaugendes Bekleidungsstück, insbesondere für Haustiere, wie Hunde oder dgl., mit einem aus einem Streifenmaterial (16) geformten Höschen (16,16b,16c), mit aufsaugenden Mitteln (9) und Mitteln zum Befestigen und Ausrichten des Bekleidungsstückes gegenüber dem Körper des Benutzers, die mindestens einen Riemen (10) und Verbindungsmittel (12) zum lösbaren Befestigen des Riemens aufweisen,
**dadurch gekennzeichnet, daß** der Riemen (10) aus weichem Material besteht und Öffnungen oder Schlitze (11) aufweist, die gleichmäßig in Längsrichtung verteilt angeordnet sind, daß die Verbindungsmittel (12) in Abhängigkeit von den Schlitzen (11) zwei Riementeile lösbar miteinander verbinden, und daß jeder Endabschnitt (21, 22; 29, 30) des Höschens eine Vielzahl von Schlitzen (23) aufweist, die parallel zueinander und in Längsrichtung des Höschens verlaufen, um wenigstens einen Riemen (10) zur Befestigung des Höschens um den Tierkörper in die Schlitze einzufädeln und hindurchzuführen.

2. Bekleidungsstück nach Anspruch 1,
**dadurch gekennzeichnet, daß** das aufsaugende Mittel (9) eine saugende Unterlage (9) aufweist, die auf die Außenseite des Höschens (16) aufgebracht ist, und daß die Unterlage (9) einen aufsaugenden Kern (25, 35) hat, an dem ein Streifen aus Kunststoff (26, 36) befestigt ist, der einen Klebestoff (27), z.B. einen Heißkleber, aufweist.

3. Bekleidungsstück nach Anspruch 2,
**dadurch gekennzeichnet, daß** der aufsaugende Kern (35) ein mehrschichtiges Material aus ungewobenem, luftdurchlässigem Gewebe mit oder ohne hochabsorbierenden Polymeren ist, das von einer Kunststoffschicht (26) bedeckt und von einer Hülle (39) umgeben ist, an deren Rückseite ein Klebstoff (40) vorgesehen ist.

4. Bekleidungsstück nach einem der Ansprüche 1 bis 3,
**dadurch gekennzeichnet, daß** der wenigstens eine Riemen (10) aus elastischen Gewebe oder einem Gewebe besteht, das natürliche oder künstliche Fasern enthält.

5. Bekleidungsstück nach einem der Ansprüche 1 bis 4,
**dadurch gekennzeichnet, daß** es mindestens einen Riemen (10, 10a, 10b) aufweist, daß der oder die Riemen durch Öffnungen einer Vielzahl von Schlitzen (23) geführt sind, und daß die Enden des Riemens oder die Enden zweier verschiedener Riemen durch die Verbindungsmittel (12) miteinander verbunden sind.

6. Bekleidungsstück nach Anspruch 5,
**dadurch gekennzeichnet, daß** jeder der beiden Riemen (10a, 10b) durch mindestens eine Öffnung der beiden Schlitzreihen (23) geführt ist, und daß die beiden Enden desselben Riemens durch die Verbindungsmittel (12) miteinander verbunden sind.

7. Bekleidungsstück nach einem der vorhergehenden Ansprüche,
**dadurch gekennzeichnet, daß** das Höschen (16, 16c) mindestens eine Öffnung (18) an einer zentralen Lage aufweist.

8. Bekleidungsstück nach einem der vorhergehenden Ansprüche,
**dadurch gekennzeichnet, daß** die Verbindungsmittel (12) aus Kunststoff bestehende Knöpfe mit zwei Köpfen aufweisen, die durch die Schlitze (11) in dem (den) Riemen passen.

9. Bekleidungsstück nach einem der vorhergehenden Ansprüchen,
**dadurch gekennzeichnet, daß** das das Höschen (16) bildende Streifenmaterial aus ungewobenem Material, aus genähtem Material, trockengeripptem, geheftetem Material, Polypropylen, Polyester, Polyamidfasermaterial, Kunststoffilm, Schichtmaterial mit extrudiertem Kunststoff in Form eines Filmes gebildet ist.

10. Bekleidungsstück nach einem der vorhergehenden Ansprüche,
**dadurch gekennzeichnet, daß** es einen weiteren Riemen (41) aufweist, der durch zwei Schlitze des Höschens (16) ragt und bei Verbindung mit dem Halsband des Tieres um dessen Brust geführt ist, und daß ein zusätzlicher Riemen (44) vorgesehen ist, der mit dem weiteren Riemen (41) verbunden ist und sich über den Rücken des Tieres erstreckt.

11. Bekleidungsstück nach einem der Ansprüche 1 bis 9,
**dadurch gekennzeichnet, daß** das Höschen die Umrißform einer Sanduhr hat.

12. Bekleidungsstück nach einem der Ansprüche 1 bis 9,
**dadurch gekennzeichnet, daß** das Höschen (16C) T-Form hat.

13. Bekleidungsstück nach Anspruch 1,
**dadurch gekennzeichnet, daß** die aufsaugenden Mittel (9A, 9B) eine aufsaugende Schicht (49) aufweisen, die zwischen zwei Schichten (40 und 41) des das Höschen (46) bildenden Streifenmaterials sandwichartig angeordnet ist.

14. Bekleidungsstück nach Anspruch 10,
**dadurch gekennzeichnet, daß** die beiden Schichten (40 und 41) des Streifenmaterials jeweils aus filtrierendem, ungewobenem und aus einem wasserdichtem Material, wie einem Kunststoffilm, bestehen.

## Revendications

1. Vêtement absorbant, en particulier pour des animaux domestiques tels que des chiens et autres, comprenant une culotte (16, 16B, 16C) formée à partir d'un matériau en feuille (16), des moyens absorbants (9) et des moyens pour attacher et ajuster ledit vêtement au corps de l'utilisateur, comprenant au moins une lanière (10) et des moyens de fixation (12) adaptés pour joindre de façon amovible ladite lanière,
**caractérisé en ce que**
ladite lanière (10) est en un matériau souple et est munie d'ouvertures ou de fentes (11) réparties uniformément selon une direction longitudinale et **en ce que** lesdits moyens de fixation (12) sont adaptés pour joindre de façon amovible deux parties de ladite lainière en correspondance avec lesdites fentes (11) ; chacune des sections d'extrémité (21, 22 ; 29, 30) de la culotte étant munie d'une pluralité de fentes (23) parallèles les unes aux autres et à la direction longitudinale de la culotte, ce qui permet l'introduction et le passage d'au moins une lanière (10) pour attacher la culotte autour du corps de l'animal.

2. Vêtement selon la revendication 1, **caractérisé en ce que** lesdits moyens absorbants (9) comprennent un tampon absorbant (9) appliqué sur la surface extérieure de ladite culotte (16), ledit tampon (9) comprenant une âme absorbante (25, 35) à laquelle est fixée une feuille de matériau plastique (26, 36) pourvue d'un adhésif (27), par exemple thermosoudée.

3. Vêtement selon la revendication 2, **caractérisé en ce que** ladite âme absorbante (35) est un matériau multicouche en un tissu aéré non tissé avec ou sans polymère super absorbant, recouvert d'une feuille de matériau plastique (26) et enveloppé dans une couverture (39) au dos de laquelle est prévu un adhésif (40).

4. Vêtement selon les revendications 1 à 3, **caractérisé en ce que** ladite au moins une lanière (10) est en un tissu élastique ou en un tissu incorporant des fils de fibres naturelles ou synthétiques.

5. Vêtement selon les revendications 1 à 4, **caractérisé en ce qu'il est** muni d'au moins une lanière (10, 10a, 10b), ladite lanière ou chaque lanière passant à travers les ouvertures d'une pluralité de fentes (23), les bords de ladite lanière ou les bords de deux lanières différentes étant joints ensemble par lesdits moyens de fixation (12).

6. Vêtement selon la revendication 5, **caractérisé en ce que** chacune desdites deux lanières (10a, 10b) passe à travers au moins une ouverture des deux pluralités de fentes (23), les deux bords d'une même lanière étant joints ensemble par lesdits moyens de fixation (12).

7. Vêtement selon une quelconque des revendications précédentes, **caractérisé en ce que** ladite culotte (16, 16C) est munie d'au moins une ouverture (18) en une position centrale.

8. Vêtement selon une quelconque des revendications précédentes, **caractérisé en ce que** lesdits moyens de fixation (12) sont constitués par des boutons à deux têtes en un matériau plastique, les têtes desdits boutons étant adaptées pour s'ajuster à des fentes (11) dans la ou les lanière(s).

9. Vêtement selon une quelconque des revendications précédentes, **caractérisé en ce que** le matériau en feuille formant ladite culotte (16) est choisi parmi le groupe formé par les matériaux non tissés, les matériaux à liaison filée, disposés à sec, les matériaux à liaison maillée, le polypropylène, le polyester, les matériaux à fibres de polyamide, les films plastiques, les matériaux stratifiés avec des matériaux plastiques extrudés sous forme d'un film.

10. Vêtement selon une quelconque des revendications précédentes, **caractérisé en ce qu'**il est muni d'une lanière supplémentaire (41) passant par deux fentes de la culotte (16) et autour de la poitrine de l'animal, dans certains cas reliée au collier de l'animal, et une lanière de support supplémentaire (44) attachée à ladite lanière supplémentaire (41) et passant sur le dos de l'animal.

11. Vêtement selon une quelconque des revendications 1 à 9, **caractérisé en ce que** ladite culotte à la forme d'un sablier.

12. Vêtement selon une quelconque des revendications 1 à 9, **caractérisé en ce que** ladite culotte (16C) à la forme d'un T.

13. Vêtement selon la revendication 1, **caractérisé en ce que** lesdits moyens absorbants (9A, 9B) comprennent une couche absorbante (49) prise en sandwich entre lesdites deux couches (40) et (41) du matériau en feuille formant ladite culotte (46).

14. Vêtement selon la revendication 10, **caractérisé en ce que** lesdites deux couches (40) et (41) du matériau en feuille sont respectivement en un matériau non tissé de filtrage et en un matériau imperméable, tel qu'un film en un matériau plastique.
